# FASCICULE DE BREVET EUROPEEN

(11) **EP 2 996 036 B1**
(45) Date de publication et mention de la délivrance du brevet: **14.08.2019**
(21) Numéro de dépôt: 15182492.7
(22) Date de dépôt: 26.08.2015
(51) Int. Cl.: G06F 9/44, H04L 12/851

(54) **PROCÉDÉ DE SURVEILLANCE D'UNE ARCHITECTURE APPLICATIVE COMPORTANT UNE PLURALITÉ DE SERVICES**
VERFAHREN ZUR ÜBERWACHUNG EINER APPLIKATIONSARCHITEKTUR, DIE EINE VIELZAHL VON DIENSTEN UMFASST
METHOD FOR MONITORING AN APPLICATION ARCHITECTURE COMPRISING A PLURALITY OF SERVICES

(30) Priorité: 15.09.2014 FR 1458649
(43) Date de publication de la demande: 16.03.2016
(73) Titulaire: BULL SAS, 78340 Les Clayes sous Bois (FR)
(72) Inventeur: DEMEILLIEZ, Bruno, 38330 Montbonnot-Saint-Martin (FR); CHAABANE, Waijh, 73000 Chambery (FR); BAGNARD, Natacha, 38100 Grenoble (FR)
(74) Mandataire: Cabinet Camus Lebkiri

(56) Documents cités:
- Ruslan Kiyanchuk: "OpenStack Metering Using Ceilometer", , 3 juillet 2013 (2013-07-03), XP002740128, Extrait de l'Internet: URL:https://www.mirantis.com/blog/openstac k-metering-using-ceilometer/ [extrait le 2015-05-27]
- Piotr Siwczak: "Some practical considerations for monitoring in OpenStack cloud", , 4 septembre 2012 (2012-09-04), XP002740129, Extrait de l'Internet: URL:https://www.mirantis.com/blog/openstac k-monitoring/ [extrait le 2015-05-27]

## Description

### DOMAINE TECHNIQUE DE L'INVENTION

L'invention se rapporte à un procédé de surveillance d'une architecture applicative comportant une pluralité de services.

Le domaine de l'invention est celui de la surveillance des architectures applicatives de traitement automatisé de données comportant une pluralité de services, pluralité mise en oeuvre par au moins un serveur. Le domaine de l'invention est en particulier celui des architectures multi tiers comportant au moins deux services. Dans l'état de la technique, on parle aussi de SOA pour Architecture Orientée Services. Un serveur est un dispositif physique ou virtuel de traitement automatisé de données. Un dispositif virtuel est aussi appelé une partition. Dans ce contexte un dispositif de traitement automatisé de données est aussi appelé une machine.

Un service est, par exemple :
- un service de gestion de charge ;
- un service d'ordonnancement de tâches ;
- un service de traitement ;
- un service de gestion de base de données ;
- un bus de service d'entreprise ;
- un service web...

La liste n'est pas exhaustive. Un service est un programme exécuté par un dispositif de traitement automatisé de données. Un programme de type service est apte à recevoir des messages, par exemple via un réseau, et à répondre à ces messages.

Ici réseau est à comprendre au sens large c'est-à-dire comme la mise en oeuvre d'un protocole de communication par une machine. On rappelle le cas des adresses de rebouclage (loopback ou localhost) qui permet à deux programmes mis en oeuvre par le même dispositif de communiquer via le réseau. Ceci n'exclut pas d'autres modes de communication locaux comme, par exemple, les canaux nommés ou la mémoire partagée qui sont ici assimilés à une mise en réseau.

Une architecture applicative est aussi appelée une application, c'est le terme qui sera employé dans la suite du document.

### ETAT DE LA TECHNIQUE ANTERIEURE

Il n'est pas rare de se retrouver dans une situation dans laquelle, pour une application, le respect de la qualité de service est bien en dessous de seuils critiques, ou pires, une situation dans laquelle l'application ne fonctionne plus du tout.

De telles situations s'expliquent dans la plupart des cas par le fait qu'aucune surveillance n'est en place sur l'infrastructure hébergeant l'application et/ou que la remontée d'éventuelles alertes n'est pas faite ou est faite trop tardivement.

Le plus souvent les remontées d'incidents sont le fait des utilisateurs finaux eux-mêmes qui constatant l'indisponibilité d'une application appelle un service de gestion pour signaler un problème. Ledit service constate alors le problème et commence à essayer de le résoudre.

Dans ces situations, il est souvent très difficile de trouver l'origine du problème afin de le corriger, car les données nécessaires à l'analyse du problème ne sont pas ou plus disponibles, et car l'heure de démarrage du problème n'est pas connue ou est approximative.

Lorsqu'elles le sont il s'agit de données de surveillance matérielle brutes : températures processeurs, quantité de mémoire, nombre d'entrées/sorties... Rien ne permet de relier ces données à une ou plusieurs applications et il est donc très difficile de faire le lien entre une donnée "technique" et un problème applicatif.

La quantité de données à analyser est importante et fonction du nombre de serveur et de traitements à surveiller. Les données sont de plus décorrelées. Les données peuvent aussi inclurent des fichiers complets de journalisations de serveur. Cela augmente encore la quantité de données à traiter.

Dans ces conditions il est donc particulièrement difficile de pouvoir résoudre le problème. Le document extrait de l'Internet de Ruslan Kiyanchuk et intitulé "OpenStack Metering Using Ceilometer" du 3 juillet 2013 présente un ensemble de moyens pour permettre d'extraire des mesures et d'identifier des anomalies de fonctionnement de l'architecture applicative "OpenStack".

### EXPOSE DE L'INVENTION

L'invention vise à remédier à tout ou partie des inconvénients de l'état de la technique identifiée ci-dessus, et notamment à proposer des moyens pour permettre de collecter des données et d'utiliser ces données pour exprimer un niveau de qualité de service globale c'est-à-dire prenant en compte plusieurs aspects d'une application, et ce spécifiquement pour chaque application surveillée.

L'invention permet de déployer une solution de surveillance sur l'ensemble des serveurs hébergeant la solution et de mettre en place une mesure du temps de réponse. Une fois cette surveillance déployée, l'invention permet d'analyser les seuils d'utilisation des ressources des différents serveurs ainsi que les temps de réponse/traitements de l'application en les comparants à des seuils d'acceptabilité fixés par le SLA de l'application. Une telle SLA prend alors en compte l'application au-delà de l'architecture.

Dans ce dessein, un aspect de l'invention se rapporte à un procédé de surveillance automatique en production d'une architecture applicative selon la revendication 1, un dispositif correspondant selon la revendication 10 ainsi que un dispositif de stockage numérique comportant un fichier correspondant à des codes instructions selon la revendication 9. Les revendications dépendantes définissent d'autres aspects de l'invention.

### BREVE DESCRIPTION DES FIGURES

D'autres caractéristiques et avantages de l'invention ressortiront à la lecture de la description qui suit, en référence aux figures annexées, qui illustrent :
- la figure 1, une illustration d'une architecture permettant la mise en oeuvre de l'invention ;

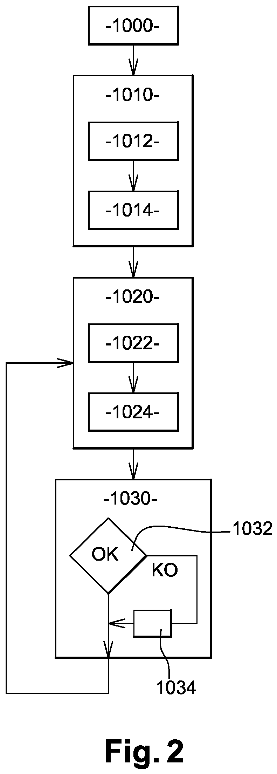

- la figure 2, une illustration d'étapes du procédé selon l'invention.

Pour plus de clarté, les éléments identiques ou similaires sont repérés par des signes de référence identiques sur l'ensemble des figures.

L'invention sera mieux comprise à la lecture de la description qui suit et à l'examen des figures qui l'accompagnent. Celles-ci sont présentées à titre indicatif et nullement limitatif de l'invention.

### DESCRIPTION DETAILLEE D'UN MODE DE REALISATION

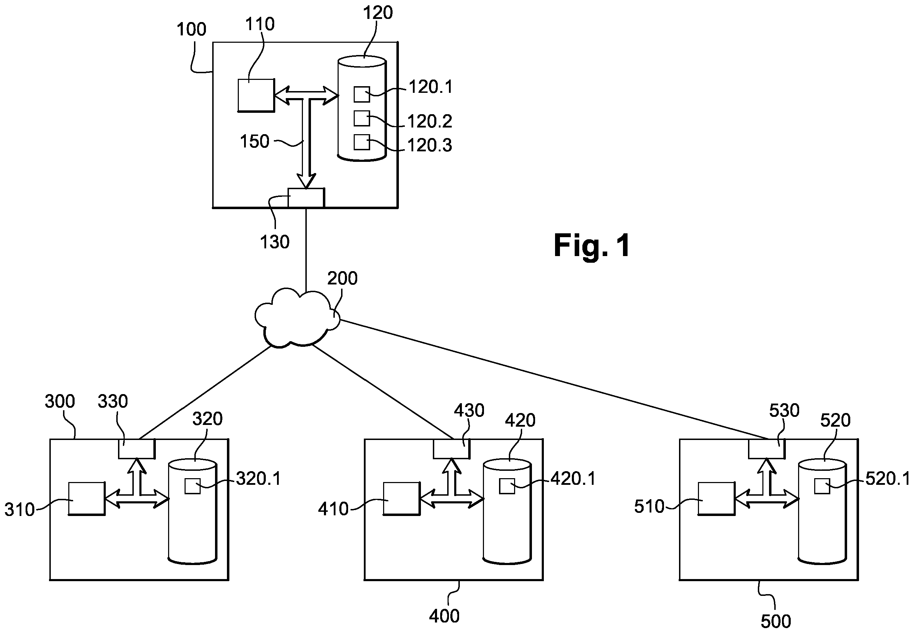

La figure 1 montre un dispositif serveur 100 de surveillance. Le serveur de surveillance comporte :
- un microprocesseur 110 ;
- des moyens de stockage 120, par exemple un disque dur qu'il soit local ou distant, qu'il soit simple ou en grille (par exemple RAID) ;
- une interface 130 de communication, par exemple une carte de communication selon le protocole Ethernet. D'autres protocoles sont envisageables comme IP, « Fibre Channel » ou InfiniBand.

Le microprocesseur 110 du serveur de surveillance, les moyens 120 de stockage du serveur de surveillance et l'interface 130 de communication du serveur de surveillance sont interconnectés par un bus 150.

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsqu'un dispositif, ou une application émet un message, ce message est émis via une interface de communication dudit dispositif ou de ladite application. Ces principes sont applicables que le dispositif soit réel ou virtuel.

La figure 1 montre que les moyens de stockage du serveur de surveillance comportent :
- une zone 120.1 de surveillance comportant des codes instructions correspondant à une mise en oeuvre du procédé selon l'invention, en particulier pour le déploiement des sondes, l'enregistrement des données d'exploitation et des calculs basés sur ces données ;
- une zone 120.2 de paramétrage apte à comporter des enregistrements, chaque enregistrement correspondant au paramétrage d'une sonde ;
- une zone 120.3 d'enregistrement des données d'exploitation.

La zone 120.2 de paramétrage est une zone structurée, par exemple :
- un fichier csv ;
- un fichier ini ;
- un fichier xml ;
- un fichier json ;
- une base de données
- ... la liste n'est pas exhaustive.

Un paramétrage d'une sonde comporte au moins les informations suivantes :
- un identifiant de cible : il s'agit d'un nom ou d'un identifiant d'une machine sur laquelle la sonde doit produire des données. Un tel identifiant est par exemple une adresse selon un protocole de communication parmi au moins ceux cités précédemment ;
- un type de sonde : il s'agit d'une information codée qui indique les données que la sonde doit produire. Une sonde produit des informations dont le type est par exemple :
   - taux d'utilisation CPU ;
   - volume de lecture/écriture disque ;
   - volume de lecture/écriture réseau ;
   - volume d'utilisation de la mémoire ;
   - temps de réponse d'un service http ;
   - date de déclenchement réelle d'un travail planifié ;
   - durée d'exécution d'un travail planifié ;
   - durée d'exécution d'une requête d'interrogation d'une base de données ;
   - durée de traitement d'un message par un bus de service d'entreprise (ESB)
   - ... la liste n'est pas exhaustive ;
- une date de démarrage de la sonde : c'est une date à partir de laquelle la sonde correspondant au paramétrage commence à produire des données;
- une durée de collecte, c'est-à-dire une durée pendant laquelle la sonde doit produire des données. On utilise une valeur prédéterminée pour spécifier une collecte permanente ;
- un rythme de collecte : c'est-à-dire une période ou une fréquence selon laquelle la sonde doit produire des données. Dans une mise en oeuvre classique de l'invention, un tel rythme s'exprime en minute. Un exemple de rythme est une production de donnée par minute ;
- un seuil d'anomalie : c'est-à-dire une valeur à utiliser dans une comparaison avec une donnée produite pour déterminer si ladite donnée produite est normale ou anormale.

Un paramétrage d'une sonde comporte également un identifiant de paramétrage d'une sonde que l'on appelle ici également un identifiant de sonde. Il s'agit soit d'une combinaison d'information, par exemple le type de sonde et l'identifiant de cible, ou d'une information explicite comme un compte ou un identifiant unique tel qu'un GUID. L'utilisation d'un tel identifiant de sonde permet, lors d'un enregistrement de données, d'établir une relation entre les données enregistrées et le paramétrage de sonde.

La zone 120.3 d'enregistrement de données d'exploitation est, une zone structurée dans laquelle une sonde enregistre des données qu'elle produit. Une sonde déployée produit des données d'exploitation. Ces données sont enregistrées de manière à pouvoir être associées à un paramétrage de sonde. Cette associant est réalisée soit, par exemple, par un contenu de la zone d'enregistrement, soit, dans un autre exemple, par un nom de la zone. Dans un tel cas la zone d'enregistrement des données d'exploitation est un fichier dont le nom comporte un identifiant de sonde. Dans cet autre exemple, la zone 120.3 comporte autant de fichier qu'il y a de sondes produisant des données d'exploitation.

La figure 1 montre que le serveur 100 de surveillance est connecté à un réseau 200.

La figure 1 montre, connectée au réseau 200 :
- un serveur 300 de présentation comportant :
   - un microprocesseur 310 ;
   - des moyens de stockage 320 comportant :
      - une zone 320.1 comportant des codes instruction correspondant à un service de présentation;
   - une interface 330 de communication ;
- un serveur 400 de traitement comportant :
   - un microprocesseur 410 ;
   - des moyens de stockage 420 comportant :
      - une zone 420.1 comportant des codes instruction correspondant à un service de traitement de données;
   - une interface 430 de communication ;
   - un serveur 500 de données comportant :
      - un microprocesseur 510 ;
      - des moyens de stockage 520 comportant :
         - une zone 520.1 comportant des codes instruction correspondant à un service de base de données;
      - une interface 530 de communication.

La figure 1 illustre donc une architecture applicative classique comportant trois services, chaque service étant mis en oeuvre sur une machine, réelle ou virtuelle, différente. Dans d'autres mises en oeuvre, les services pourraient être répartis sur une ou deux machines. Le principe de fonctionnement d'une telle architecture est connu : le serveur de présentation reçoit une première requête dont l'interprétation par le service de présentation provoque l'émission de nouvelles requêtes vers les services de l'architecture applicative. Une fois les réponses aux nouvelles requêtes obtenues, le service de présentation produit une réponse à la première requête.

La figure deux montre une étape 1000 de chargement d'un paramétrage d'au moins une sonde. Dans l'étape 1000 de chargement, le serveur de surveillance lit le contenu de la zone 120.2 de paramétrage de ses moyens de stockage pour y lire au moins un enregistrement correspondant à un paramétrage d'une sonde. Un paramétrage d'une sonde a été précédemment décrit.

Pour chaque enregistrement lu à l'étape 1000 de chargement, le serveur de surveillance met en oeuvre une étape 1010 de déploiement d'une sonde.

Dans l'étape 1010 le serveur de surveillance effectue un déploiement selon les données contenues dans l'enregistrement lu. L'étape 1010 comporte essentiellement deux actions :
- copie 1012 de la sonde: il s'agit de l'écriture sur les moyens de stockage de la cible de codes instructions correspondant à la production des données que doit produire la sonde. De tels codes instructions sont soit un script, soit du code compilé aussi appelé code binaire qu'il soit natif ou non. Ici on parle bien de copie et pas d'installation on entend donc une simple copie à l'exclusion de toute modification du système sur lequel s'effectue la copie autre que la copie elle-même. Autrement dit, l'effacement des fichiers copiés lors de cette copie ramène le système à son état initial, c'est-à-dire son état avant le déploiement ;
- planification 1014 de la sonde : il s'agit de configurer la sonde copiée pour qu'elle produise des données à partir de la date de début de collecte, au rythme de collecte, et pendant la durée de collecte. Cela se fait soir via un planificateur de travaux tel qu'en comporte tous les systèmes d'exploitation, soit par écriture de la sonde qui comporte alors une boucle au cours de laquelle elle alterne production de données et mise en sommeil pour respecter le paramétrage. Dans le cas de la mise en oeuvre d'un planificateur, on utilise celui d'un serveur n'appartenant pas à l'application, par exemple le serveur de surveillance. Ainsi on n'altère pas l'application et il est aisé de : démontrer l'innocuité de la surveillance vis-à-vis de l'application et/ou supprimer la surveillance.

L'étape 1010 est suivie d'une étape 1020 de collecte de données d'exploitation. Dans l'étape 1020 les sondes déployées, s'exécutant selon leur paramétrage effectuent essentiellement deux actions :
- production 1022 d'une donnée d'exploitation, cette donnée produite dépendant du type de la sonde déployée comme expliqué pour l'étape de déploiement. Pour la production d'une donnée, les codes instructions correspondant aux sondes utilisent, selon les cas :
   - des fichiers de logs applicatifs ;
   - des fichiers de traces applicatifs;
   - des fichiers de performances systèmes ;
   - des interceptions de communications ;
   - ... la liste n'est pas exhaustive ;
- enregistrement 1024 horodaté de la donnée produite: cette action consiste à émettre la donnée produite vers le serveur de surveillance pour qu'elle soit enregistrée dans la zone 120.3 d'enregistrement des moyens de stockage du serveur de surveillance.

On note que, dans une variante simple, les sondes déployées n'effectuent aucun traitement nécessitant des ressources au-delà de la lecture de fichier et/ou de la lecture de données de performance. L'impact des sondes sur les dispositifs sur lesquels elles sont déployées est donc minime. Dans des variantes plus complexes, le code instruction des sondes étant maîtrisé, ledit impact reste maîtrisé. La solution selon l'invention est donc exploitable en production ce qui rend une surveillance temps réel possible. Ici le temps réel est à l'échelle du rythme de collecte, c'est dire dans un exemple au niveau de la minute.

Les sondes produisent des données au rythme correspondant à leur paramétrage, mais elles peuvent produire plus d'une donnée à chaque réveil. Par exemple pour une sonde traitant de requête elle peut, par exemple :
- produire une donnée comptant les requêtes depuis son précédent réveil ;
- produire une donnée par requête depuis son précédent réveil.

Une sonde déployée peut donc agréger des données, ou émettre une pluralité de données.

Le serveur de surveillance conserve ainsi un historique des données produites. Lors de l'enregistrement par le serveur de surveillance chaque donnée est associée à une date : c'est un horodatage. Soir cette date a été fournie en même temps que la donnée, soit cette date est déterminée par le serveur de surveillance en fonction d'une horloge interne. Lors de l'enregistrement, chaque donnée est associée

L'étape de collecte est suivie d'une étape 1030 de calcul d'un niveau de service. L'étape 1030 dépend d'au moins un paramétrage d'une fonction de calcul. Ce paramétrage d'une fonction de calcul fait partie d'un paramétrage général d'une surveillance, au même titre qu'une production d'enregistrements de paramétrage de sonde.

Dans la variante la plus simple, une fonction de calcul est mise oeuvre dans une étape 1032 de calcul d'un niveau de service à chaque enregistrement d'une donnée d'exploitation et pour la donnée d'exploitation enregistrée. Dans cette variante la fonction consiste à comparer la donnée au seuil associée au paramétrage de sonde correspondant. En fonction du résultat de la comparaison, on passe à une étape 1034 d'émission d'un message alerte ou on continue la collecte. Dans cette variante les données utilisées sont les plus récentes, c'est-à-dire les dernières produites.

Dans une autre variante, dans l'étape 1032 de calcul, pour un paramétrage de sonde, on prend en compte une pluralité de données, par exemple les données enregistrées au cours des dernières 30 minutes. On effectue une moyenne de ces données et on compare la moyenne au seuil associé au paramétrage de sonde. Dans cette même variante, plutôt que de faire une moyenne, si la dernière donnée est en anomalie, alors on détermine depuis combien d'enregistrements elle est en anomalie. Si cela correspond à un nombre d'enregistrements supérieur à un seuil prédéterminé, alors on passe à l'étape 1034 d'émission d'un message d'alerte. Sinon on continue simplement la collecte. Une telle mise en oeuvre correspond, par exemple, à un niveau de SLA exprimé comme suit :
- est-ce que le CPU du serveur de traitement est resté plus de 10 minutes au-dessus de 75% d'utilisation;
- est-ce que le serveur de présentation met plus d'une seconde à produire ses réponses et ceux pendant les 5 dernières minutes ;
- ... la liste n'est pas exhaustive.

Dans une autre variante, dans l'étape 1032 de calcul, on met en oeuvre une fonction utilisant des données issues de plusieurs sondes. Il est ainsi possible d'utiliser une fonction qui prend en compte un pourcentage d'utilisation de CPU et un pourcentage d'utilisation de mémoire, ou une fonction qui prend en compte un pourcentage de CPU et un temps de réponse à une requête. Le nombre de sondes utilisées n'est pas limité. Chaque valeur peut également être pondérée par un coefficient selon, par exemple, la criticité estimée de la sonde ayant produit la valeur. On note que tout type de fonction est utilisable, polynomiale ou autre. Parmi les autres fonctions, on cite notamment les fonctions booléennes. La fonction peut également utiliser les données d'exploitation uniquement, ou les données d'exploitation et les seuils d'anomalie.

Dans encore une autre variante, la fonction de calcul prend en compte les données produites par plusieurs sondes sur une période de temps prédéterminée. On utilise donc plusieurs sondes et pour chaque sonde plusieurs données correspondant à une même période de temps.

Dans les cas où on utilise plusieurs sondes pour le calcul, on parle alors d'un calcul global. L'invention permet donc de calculer un niveau de service global, car elle permet pour une période donnée, d'agréger par une onction des données d'exploitation correspondant à plus d'un service d'une architecture multiservice.

Avec l'invention il devient possible d'avoir une expression d'un niveau de SLA du type : il ne faut pas que dix requêtes en moins d'une minute au serveur de présentation provoquent une charge supérieure à 50% du CPU sur le serveur de données. Pour arriver à ce résultat, il suffit de configurer une sonde pour enregistrer les requêtes sur le serveur de présentation et une sonde de surveillance de CPU sur le serveur de données. Puis on utilise une fonction traitant les données produites par ces deux sondes.

Il est alors possible de conditionner l'émission d'un message d'alerte selon un niveau de service global.

Le fait d'horodater les données d'exploitation enregistrées permet aussi de retrouver toutes les données d'exploitation produites à une date correspondant à l'émission d'un message d'alerte, et ce même si toutes les données enregistrées n'ont pas été utilisées dans le calcul global dont la mise en oeuvre a abouti à l'émission du message d'alerte.

Dans une variante de l'invention, la planification de l'exécution des sondes déployées se fait de manière homogène. C'est-à-dire que les sondes déployées ont des dates de démarrage identique à un multiple de leur rythme de collecte près. Dans une sous variante, les rythmes de collecte des sondes d'une pluralité de sonde sont identiques. Cela permet d'obtenir des données comparables, car appartenant à des mêmes intervalles de temps. Cela peut encore être amélioré par une synchronisation des horloges système si l'architecture de services comporte une pluralité de serveurs.

L'invention permet ainsi la mise en place d'un système de surveillance efficace autorisant l'expression de niveaux de services complexes.

## Revendications

1. Procédé de surveillance automatique en production d'une architecture applicative comportant une pluralité de services ledit procédé comportant les étapes suivantes :
- Pour chaque sonde d'une pluralité de sondes, **une sonde étant des codes instructions correspondant à la production des données que doit produire la sonde** :
- chargement (1000) d'un paramétrage de la sonde le paramétrage étant un enregistrement comportant au moins les informations suivantes :
- identifiant de sonde
- identifiant d'une cible
- type de la sonde
- date de démarrage
- durée de collecte
- rythme de collecte
- seuil d'anomalie
- déploiement (1010), **par** copie (1012) de la sonde sur les moyens de stockage de la cible et planification (1014) de la sonde pour qu'elle produise des données à partir de la data de démarrage, au rythme de collecte et pendant la durée de collecte, ladite sonde étant paramétrée selon au moins l'identifiant de cible et le type de la sonde,
- collecte (1020) de données d'exploitation selon la date de démarrage, la durée de collecte et le rythme de collecte,
- production d'au moins une donnée d'exploitation par la sonde déployée
- enregistrement horodaté de la donnée produite, l'enregistrement étant associé à la sonde l'ayant produite,
- calcul (1030) d'un niveau de service en fonction des données enregistrées et d'au moins le seuil d'anomalie du paramétrage d'au moins deux sondes de ladite pluralité,
- quand le niveau de service calculé n'atteint pas le niveau requis production et émission d'un message d'erreur.

2. Procédé de surveillance selon la revendication 1 **caractérisé en ce que** la fonction de calcul dudit niveau de service est une fonction pour une sonde d'une donnée enregistrée.

3. Procédé de surveillance selon la revendication 2 **caractérisé en ce que** la donnée est la dernière enregistrée.

4. Procédé de surveillance selon la revendication 1 **caractérisé en ce que** la fonction de calcul dudit niveau de service est une fonction pour une sonde d'une pluralité de données enregistrées selon un intervalle de temps prédéterminé.

5. Procédé de surveillance selon la revendication 1 **caractérisé en ce que** la fonction de calcul dudit niveau de service est une fonction pour une pluralité de sondes d'une donnée par sonde.

6. Procédé de surveillance selon la revendication 1 **caractérisé en ce que** la fonction de calcul dudit niveau de service est une fonction pour une pluralité de sondes d'une pluralité de données par sonde selon un intervalle de temps prédéterminé.

7. Procédé selon l'une des revendications 5 ou 6, **caractérisé en ce que** la pluralité de sonde est un sous-ensemble des sondes paramétrées.

8. Procédé selon l'une des revendications précédentes **caractérisé en ce que** s'il y a une pluralité de sonde, les dates de démarrage et les rythmes de collecte son homogénéisés.

9. Dispositif de stockage numérique comportant un fichier correspondant à des codes instructions qui, lorsqu'ils sont exécutés par un ordinateur, mettent en oeuvre le procédé selon l'une des revendications précédentes.

10. Dispositif comportant des moyens pour mettre en oeuvre le procédé selon l'une des revendications 1 à 8.

## Patentansprüche

1. Automatsches Überwachungsverfahren einer applikativen Architektur, umfassend eine Vielzahl von Diensten, wobei das genannte Verfahren die folgenden Schritte umfasst:
- Für jede Sonde eine Vielzahl von Sonden, wobei eine Sonde Anweisungscodes sind, die der Produktion der Daten entsprechen, die die Sonde produzieren muss:
- Laden (1000) einer Parametrierung der Sonde, wobei die Parametrierung ein Speichern ist, umfassend wenigstens die folgenden Informationen:
∘ Sondenkennung
∘ Kennung eines Ziels
∘ Typ der Sonde
∘ Startdatum
∘ Erfassungsdauer
∘ Erfassungsrhythmus
∘ Anomalitäts-Schwellendienst
- Einführen (1010) per Kopie (1012) der Sonde auf den Speichermitteln des Ziels und Planung (1014) der Sonde, damit sie Daten ausgehend von dem Startdatum im Erfassungsrhythmus und während der Erfassungsdauer produziert, wobei die genannte Sonde gemäß wenigstens der Zielkennung und dem Typ der Sonde parametriert ist,
- Erhebung (1020) von Betriebsdaten gemäß dem Startdatum, der Erfassungsdauer und dem Erfassungsrhythmus,
- Produktion von wenigstens einer Betriebsangabe durch die eingeführte Sonde
- zeitgestempeltes Speichern der produzierten Betriebsangabe, wobei das Speichern der Sonde zugeordnet ist, die sie produziert hat,
- Berechnung (1030) eines Leistungsniveaus in Abhängigkeit von den gespeicherten Daten und wenigstens eines Anomalitäts-Schwellenwertes der Parametrierung von wenigstens zwei Sonden der genannten Vielfalt,
- wenn das berechnete Dienstniveau nicht das erforderliche Produktions- und Emissionsniveau einer Fehlernachricht erreicht.

2. Überwachungsverfahren gemäß Anspruch 1, **dadurch gekennzeichnet, dass** die Berechnungsfunktion des genannten Dienstniveaus eine Funktion für eine Sonde einer gespeicherten Angabe ist.

3. Überwachungsverfahren gemäß Anspruch 2, **dadurch gekennzeichnet, dass** die Angabe die letzte gespeicherte ist.

4. Überwachungsverfahren gemäß Anspruch 1, **dadurch gekennzeichnet, dass** die Berechnungsfunktion des genannten Dienstniveaus eine Funktion für eine Sonde einer Vielzahl von Daten, die gemäß einem vorbestimmten Zeitintervall gespeichert sind, ist.

5. Überwachungsverfahren gemäß Anspruch 1, **dadurch gekennzeichnet, dass** die Berechnungsfunktion des genannten Dienstniveaus eine Funktion für eine Vielzahl von Sonden einer Angabe pro Sonde ist.

6. Berechnungsverfahren gemäß Anspruch 1, **dadurch gekennzeichnet, dass** die Berechnungsfunktion des genannten Dienstniveaus eine Funktion für eine Vielzahl von Sonden einer Vielzahl von Daten pro Sonde gemäß einem vorbestimmten Zeitintervall ist.

7. Verfahren gemäß einem der Ansprüche 5 oder 6, **dadurch gekennzeichnet, dass** die Vielzahl von Sonden eine Teilgruppe der parametrierten Sonden ist.

8. Verfahren gemäß einem der voranstehenden Ansprüche, **dadurch gekennzeichnet, dass** die Startdaten und die Erfassungsrhythmen homogenisiert sind, wenn eine Vielzahl von Sonden vorhanden ist.

9. Digitale Speichervorrichtung, umfassend eine Datei, die den Anweisungscodes entspricht, die das Verfahren gemäß einem der voranstehenden Ansprüche umsetzen, wenn sie durch einen Computer ausgeführt sind.

10. Vorrichtung, umfassend Mittel, um das Verfahren gemäß einem der Ansprüche 1 bis 8 umzusetzen.

## Claims

1. An automatic monitoring method in producing an applicative architecture including a plurality of services, said method including the following steps of:
- for each probe of a plurality of probes, a probe being instruction codes corresponding to the production of the data that the probe has to produce:
- loading (1000) a parameterising for the probe, the parameterising being a record including at least the following information:
- probe identifier
- identifier of a target
- probe type
- start date
- collection duration
- collection rate
- fault threshold
- deploying (1010), by copying (1012) the probe on the storage means of the target and scheduling (1014) the probe such that it produces data from the start date, at the collection rate and for the collection duration, said probe being parameterised at least according to the target identifier and the probe type,
- collecting (1020) operating data according to the start date, the collection duration and the collection rate,
- producing at least one operating datum by the probe deployed
- time stamped recording the datum produced, the recording being associated with the probe that produced it,
- calculating (1030) a service level as a function of the data recorded and at least the fault threshold of the parameterising of at least two probes of said plurality,
- when the service level calculated does not reach the level required, producing and emitting an error message.

2. The monitoring method according to claim 1, **characterised in that** the calculation function of said service level is a function for a probe of a recorded datum.

3. The monitoring method according to claim 2, **characterised in that** the datum is the latest datum recorded.

4. The monitoring method according to claim 1, **characterised in that** the calculation function of said service level is a function for a probe of a plurality of data recorded according to a predetermined time interval.

5. The monitoring method according to claim 1, **characterised in that** the calculation function of said service level is a function for a plurality of probes of a datum per probe.

6. The monitoring method according to claim 1, **characterised in that** the calculation function of said service level is a function for a plurality of probes of a plurality of data per probe according to a predetermined time interval.

7. The method according to one of claims 5 and 6, **characterised in that** the plurality of probes is a subset of the parameterised probes.

8. The method according to one of the preceding claims, **characterised in that** if there is a plurality of probes, the start dates and collection rates are homogenised.

9. A digital storage device including a file corresponding to instruction codes which, when run by a computer, implement the method according to one of the preceding claims.

10. A device including means for implementing the method according to one of claims 1 to 8.
